Europäisches Patentamt

European Patent Office

Office européen des brevets

(19)

(11) Veröffentlichungsnummer: **0 357 983 B1**

(12) **EUROPÄISCHE PATENTSCHRIFT**

(45) Veröffentlichungstag der Patentschrift: **20.10.93**

(51) Int. Cl.<sup>5</sup>: **B60T 8/00**, B60T 8/26

(21) Anmeldenummer: **89114660.7**

(22) Anmeldetag: **08.08.89**

(54) **Verfahren zur lastabhängigen Regelung des Bremsdruckes an Fahrzeugen und Vorrichtung zur Durchführung des Verfahrens.**

(30) Priorität: **03.09.88 DE 3829951**

(43) Veröffentlichungstag der Anmeldung:
**14.03.90 Patentblatt 90/11**

(45) Bekanntmachung des Hinweises auf die
Patenterteilung:
**20.10.93 Patentblatt 93/42**

(84) Benannte Vertragsstaaten:
**FR GB IT SE**

(56) Entgegenhaltungen:
**EP-A- 0 149 137**
**EP-A- 0 173 954**
**FR-A- 2 539 687**

(73) Patentinhaber: **DAIMLER-BENZ AKTIENGE-
SELLSCHAFT**
**Mercedesstrasse 136**
**D-70327 Stuttgart(DE)**

(72) Erfinder: **Toepfer, Bernhard, Dr.**
**Im Weingarten 41**
**D-7000 Stuttgart 60(DE)**
Erfinder: **Reiner, Michael**
**Freibergstrasse 9**
**D-7012 Fellbach(DE)**

## Beschreibung

Die Erfindung geht aus von einem Verfahren zur Bremsung von Nutzfahrzeugen nach der Gattung des Hauptanspruchs.

In modernen konventionellen Kfz-Bremsanlagen wird zur bremsdynamisch optimalen Berücksichtigung großer Hinterachslast-Unterschiede zwischen leerem und beladenem Fahrzeug in der Regel eine automatisch lastbhängige Bremse (im folgenden mit ALB abgekürzt) vorgesehen.

Die Aufgabe solcher Systeme ist es - entsprechend der niedrigeren Achslast bei Teilbeladung - die Bremskräfte hauptsächlich an der Hinterachse, unter bestimmten Voraussetzungen aber auch an der Vorderachse, durch lastabhängige Reduktion des vom Bremspedal her eingesteuerten Bremsdruckes zu beeinflussen und damit primär der von überbremsten Hinterachsen herrührenden Schleudergefahr zu begegnen. Außerdem ist auch im Hinblick auf eine feinfühlig gestufte Bremsbetätigung eine Reduzierung des Bremsdruckniveaus bei Teilbeladungen erwünscht. Als ein Maß für die achslastgebende Eingangsgröße wird bei luftgefederten Fahrzeugen z.B. der Balgdruck, bei stahlgefederten Fahrzeugen in der Regel der - über ein Gestänge übertragene - Achseinfederweg oder das elektrische Signal eines einem Federlager vorgeschalteten, druck- oder zugempfindlichen elektronischen Lastgebers verwendet. Beispiele sind aus der DE-OS 37 11 175 bekannt.

Die mechanische Beeinflussung wenigstens eines achsspezifischen Bremsdruck-Regelventils ist anfällig gegen Beschädigungen im rauhen Betreib. Dazu ist nachteilig, daß entsprechende Bauelemente auch innerhalb einer Fahrzeugbaureihe in diversen und oft auch konstruktiv nicht einheitlichen Varianten erforderlich sind.

Eine auf ein Übertragungsgestänge sich abstützende Lasterfassung ist dazu ungenau (z.B. bei gemeinsamer Bremsdruckregelung der Achsgruppen von Fahrzeugen mit Vor- oder Nachlaufachsen oder bei harter Federung), und verursacht auch beträchtliche Kosten.

Es wurde bereits vorgeschlagen, die Bremsdrücke achsweise entsprechend dem absoluten Radschlupf zu regeln bzw. die Bremsdruckverteilung so einzuregeln, daß sich bestimmte Radschlupfrelationen zwischen den Achsen einstellen. Solche Lösungen erwiesen sich jedoch als unbefriedigend, weil die Ermittlung der absoluten Radschlupfe im gebremsten Fahrzeug mangels einer zuverlässigen Referenzgeschwindigkeit ungebremster Räder allenfalls angenähert möglich ist und weil z.B. infolge Produktionsstreuungen der Reifen auch exakt ermittelte Schlupfe noch keine sichere Information über die tatsächliche Kraftschlußinanspruchnahme bieten.

Im Gegensatz dazu zielt die Erfindung darauf ab, bewährte und robuste Komponenten, Signalwege und Geber eines Vorhandenen Antiblockier-Bremsystems (im folgenden auch mit ABS abgekürzt) auszunutzen, und damit eine auch weit unterhalb der Blockiergrenze wirkende, automatisch lastabhängige Bremsfunktion zu realisieren. Dazu schlägt die Erfindung ein Verfahren vor, welches es erlaubt, den Bremsdruck und damit die Bremskraftverteilung wenigstens achsspezifisch auch weit unterhalb der Blockiergrenze zu regeln.

Mit einer solchen Regelung ist dann möglich, an der Vorderachse unabhängig von der Bremsdrucksteuerung an der Hinterachse auch höhere Bremsdrücke als bislang üblich einzusteuern. Durch entsprechende Erweiterung des Mikroprozessor-Programms des elektronischen ABS-Reglers lassen sich die mechanischen (oder in elektropneumatischen Bremssystemen die zusätzlichen elektronischen) Rad- oder Achslastsensoren einsparen.

Das erfindungsgemäß vorgeschlagene Verfahren erlaubt somit eine erheabliche Vereinfachung und Zuverlässigkeitssteigerung eines lastadaptiven Bremssystems für Nutzfahrzeuge durch Minimierung der Zahl erforderlicher Signalgeber und ihrer notwendigen Verbindungen zu einem elektronischen Steuergerät.

Das erfindungsgemäße Verfahren und ein Ausführungsbeispiel einer Vorrichtung zu seiner Durchführung sind in der Zeichnung dargestellt und in der nachfolgenden Beschreibung erläutert.

Es zeigen:

Fig. 1    die wenigen fahrwerkseitig zu installierenden Bestandteile einer erfindungsgemäßen Vorrichtung;

Fig. 2    ein Flußdiagramm des erfindungsgemäßen Verfahrens.

Der Erläuterung des erfindungsgemäßen Verfahrens ist nachfolgend die Beschreibung der erfindungsgemäßen Vorrichtung vorangestellt.

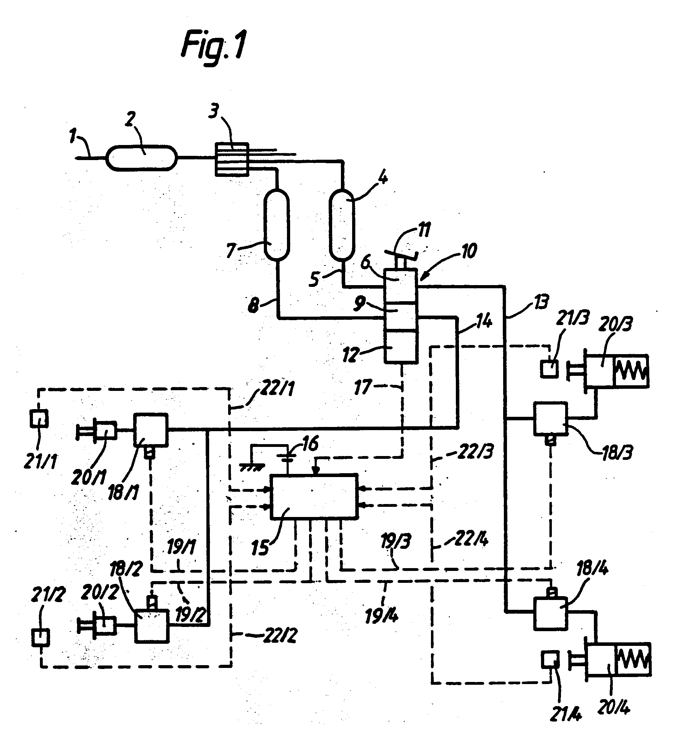

Gemäß Fig. 1 umfaßt sie Bestandteile, wie sie von hochwertigen elektronischen ABS-Systemen mit Zentralsteuerung und radnahen ABS-Ventilen an sich bereits bekannt sind. Systeme dieser Art verfügen mittels Raddrehbewegungssensoren über die Möglichkeit, mit in Abhängigkeit von Raddrehzahlen gesteuerten Radbremsdrücken das Blockieren einzelner Räder (bei Erreichen der von der Reibpaarung Reifen/Straße bestimmten Kraftschlußgrenze) dadurch zu verhindern, daß der Bremsdruck am entsprechenden Rad so lange reduziert oder zumindest nicht weiter gesteigert wird, wie die Blockiertendenz besteht.

Durch eine vom nicht gezeigte Luftkompressor kommende Speiseleitung 1 wird ein Vorratsbehälter 2 mit Druckmittel versorgt. Über ein Mehrwege-Sicherheitsventil 3 gelangt dieses in Untervorrats-

2

behälter 4 und 7 einer Mehrzahl von Bremskreisen; diese Behälter sind hier beispielhaft einem Vorderachs- und Hinterachsbremskreis des Fahrzeugs zugeordnet. Über Versorgungsleitungen 5 und 8 strömt Druckmittel zu zwei Einzelsektionen 6 und 9 des Betriebsbremsventils 10, welches durch das Pedal 11 betätigt wird. Diesem Ventil oder Pedal zugeordnet ist ein elektrischer Druckaufnehmer bzw. ein Positions- oder Stellungsgeber 12; letzterer ist stellungsschlüssig mit dem Pedal 11 bzw. dem von ihm betätigten Ventilantrieb verbunden. Über ausgangsseitige Betriebsdruckleitungen 13 und 14 versorgen die Sektionen 6 und 9 des Betriebsbremsventils 10 achsnah installierte ABS-Ventile 18/1 und 18/2 bzw. 18/3 und 18/4 zweier verschiedener Achsen mit Druckmittel. Den Ventilen 18/1 und 18/2 bzw. 18/3 und 18/4 sind Bremszylinder 20/1 und 20/2 bzw. 20/3 und 20/4 beispielsweise einer Vorder- bzw. Hinterachse des Fahrzeugs zugeordnet. Von einem elektronischen Zentralsteuergerät 15 werden die Ventile über entsprechende Steuerleitung 19/1 bis 19/4 elektrisch angesteuert. Raddrehzahlsensoren 21/1 bis 21/4 nehmen die Drehzahlen der Räder kontinuierlich auf und geben über entsprechende Leitungen 22/1 bis 22/4 radspezifische Drehzahlsignale an das elektronische Zentralsteuergerät 15 ab, welches aus einem elektrischen Energiespeicher 16 gespeist wird.

Die Ventile 18/1 bis 18/4 sind analog zu ABS-Ventilen aufgebaut, wie sie bereits in herkömmlichen Druckluft-Betriebsbremsanlagen mit überlagertem elektronischem ABS Einsatz finden. Die Vorrichtung kann diesbezüglich aber auch mit robusteren Ausführungen mit höherer Standzeit ausgestattet sein, weil diese Ventile erfindungsgemäß in einem gegenüber dem relativ schmalen Blockiergrenzbereich erweiterten Aussteuerbereich als Betriebsbremsventile wirken und somit einer höheren Steuerauslastung unterworfen sind als rein ABS-genutzte Ventile.

Bei Ausbildung als herkömmliches, für übliche Funktionen abgestimmtes ABS-System könnte diese Vorrichtung die Funktion einer ALB nicht oder nur teilweise ersetzen. Ein herkömmliches ABS-System tritt nämlich mit der Wirkung einer lastabhängigen Bremse nur bei Extrembremsungen bzw. sehr ungünstigen und seltenen Straßenverhältnissen überhaupt in Aktion. In der Regel kann ein normales ABS im Bereich häufiger Anpassungsbremsungen mit Verzögerungen unterhalb $2,5/s^2$ die Bremskräfte dem Beladungszustand nicht anpassen.

Wesentlicher als eine zweckgerechte Modifikation der Ventile 18/1 bis 18/4 gegenüber solchen wie in herkömmlichen elektronischen ABS-Systemen üblich (Hardwaremodifikation) ist die softwaremäßige Modifikation eines herkömmlichen elektronisch wirkenden ABS-Systems durch Erweiterung um die verfahrensgemäße ALB-Routine. Diese ist als auf wenige Festwerte und Parameter sowie die Raddrehzahlen als Ist-Werte des ABS-Systems zugreifendes Zusatzprogramm in das oder mit dem eigentlichen ABS-Programm integriert. Diese Zusatzprogramm enthält jedenfalls besondere Filterfunktionen und Glättungsalgorithmen für Raddrehzahldifferenzen mit niedriger Grenzfrequenz.

Das mit einer solchen Vorrichtung durchführbare Verfahren hilft der ALB-Unbrauchbarkeit eines herkömmlichen elektronischen Zentralsteuergerätes für ein ABS-System ab; es erschließt einem erfindungsgemäß modifizierten ABS eine ALB-Funktion selbst im Verzögerungsbereich unterhalb $2,5$ m/s$^2$ so, daß bislang übliche Zusatzkomponenten und Installationen am Fahrwerk zur Verwirklichung einer ALB-Funktion verzichtbar werden, ohne daß der wechsellastige Bremskomfort leidet. Erfindungsgemäß wird dazu auf die Ermittlung der absoluten Radschlupfe völlig verzichtet. Vielmehr wird für die Auswertung der von den Radsensoren gelieferten Raddrehzahlsignale jeweils die Überschreitung einer eher groben zwischenachsigen Raddrehzahldifferenz-Schwelle als Kriterium herangezogen, um bei einer nicht belastungsangepaßten Bremskraftverteilung eine Abregelung des Bremsdruckes an der betroffenen Achse auszulösen (z.B. durch Druckstufenmodulation).

Hierzu werden die Unterschiede der Raddrehzahlen bei Bremsung ermittelt und störende Einflüsse, wie etwa Offsetfehler aus unterschiedlichen Reifendurchmessern, durch Vergleich mit Raddrehzahlen während ungebremster Fahrt mittels einer einfachen Software-Normalisierungsroutine kompensiert. Die entstörten Drehzahlunterschiede entsprechen dann in erster Näherung tatsächlichen Schlupfdifferenzen. Da die Reifenschlupf-Kennlinien aufgrund unterschiedlicher Reifeneigenschaften und unterschiedlicher Reifenauslastung Streuungen aufweisen können, wird erfindungsgemäß ein diese Streuungen berücksichtigender Grenzwert für zulässige Abweichungen der zwischenachsigen Raddrehzahlen bei Bremsung festgelegt. Solange dieser Grenzwert nicht überschritten wird, bleibt eine vorgegebene Bremsdruckverteilung unverändert; wird dieser Grenzwert überschritten, wird sie in die Überschreitung des Grenzwertes verringerndem Sinne nachgeführt. Wenn dieser Grenzwert somit nur niedrig genug gewählt werden kann, dann wird auch weit unterhalb der Blockiergrenze eine Regelung der Bremskraftverteilung in einem Schlupfbereich möglich, in dem ein normales ABS völlig unwirksam ist. Erfindungsgemäß wird eine zwischenachsige Drehzahlabweichung im Bereich von 1 % bis 7 % als Grenzwert vorgeschlagen, um eine gut ansprechende und komfortable ALB-Funktion unter Mitverwendung eines ABS-Systems zu realisieren.

Eine Drehzahlabweichung in dieser Größenordnung ist mit den heute schon serienmäßig in Antiblockier-Systemen verwendeten Raddrehzahlsensoren zuverlässig und kostengünstig erkennbar.

Das erfindungsgemäße Verfahren sieht weiter vor, zu Entlastung der Regeleinrichtung und zur Komfortverbesserung sich ständig wiederholende Regelzyklen anzahlmäßig dadurch zu minimieren, daß während jeder einzelnen Fahrt mit an sich unbekanntem Beladungszustand eine Abspeicherung erfaßter oder auf diese bestimmte Nutzlast bzw. Nutzlastverteilung bezogener Bremsdruckverteilungen $P_{v(vorn)}/P_{h(hinten)}$ erfolgt, indem die so korrigierten bzw. auf neuestem Stand gehaltenen Bremsdruckverteilungen $\phi$ den nachfolgenden Bremsungen als aktuelle Ausgangswerte zugrundegelegt werden (kontinuierliche Adaption der Bremsdruckverteilung).

Wegen der gegenüber eine reinen ABS-Funktion geänderten Zielsetzung und Regelcharakteristik ist als Ergänzung einer herkömmlichen elektronischen ABS-Steuerung in der Zentralelektronik 15 eine separate bzw. parallele Auswertung von Drehzahlsignalen für die ALB-Funktion zweckmäßig, da die ABS-Funktion für ein ausreichend schnelles Ansprechverhalten nur eine begrenzte Glättung bzw. Filterung zur Störbefreiung dieser Signale erlaubt, die ALB-Funktion hingegen eine wesentlich niedrigere Grenzfrequenz der Filterung abzuspeichernder Werte erfordert, um auch bei unrunden oder an der Verschleißgrenze laufenden Reifen noch offsetarme Wertvorgaben und damit eine effektive Ausnutzung der ALB-Funktion und ein feinfühliges Ansprechen zu ermöglichen.

Um Störeinflüsse aus Drehzahlunterschieden z.B. bei gebremster Kurvenfahrt gering zu halten, wird in ähnlicher Weise parallel zur ABS-Funktion die Bildung achsweiser Mittelwerte der Drehzahlabweichungen als Eingangsgrößen der lastabhängigen Bremsdruckregelung im Bereich unterhalb der Blockiergrenze erfindungsgemäß vorgeschlagen.

Das erfindungsgemäße Verfahren zur raddrehzahlgestützt adaptiven Optimierung vorsteuerbarer zwischenachsiger Bremsdruckverteilungen kann softwaremäßig einfach erweitert werden durch Einbindung einer Adaption der Druckstufbarkeit. Die Stufbarkeit bestimmt die globale Ansprechauflösung am Bremspedal für die vom Fahrer abrufbare Sollverzögerung. Zusammen mit der ALB-Funktion bewirkt diese Erweiterung einerseits eine noch feinfühligere Handhabbarkeit des Fahrzeugs bis an die Kraftschlußgrenze zwischen Reifen und Straße und andererseits über der gesamten Standzeit der Bremsbeläge eine gleichförmige Unterdrückung der Bremsaggression, unabhängig vom Beladungszustand.

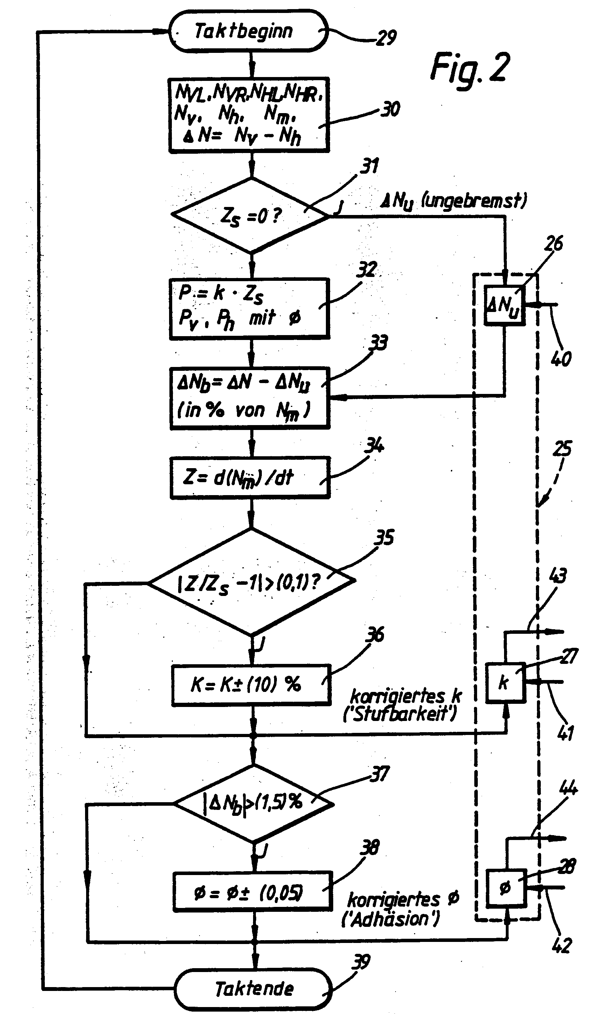

Die verfahrensgemäße Rechenroutine der Stufbarkeits- und Adhäsionsadaption ist in Fig. 2 als Flußdiagramm veranschaulicht.

Vor Fahrtbeginn sind in einem Bremsrechnerspeicher 25 in Registerzelle 26 der Wert Null, in Registerzelle 27 ein von Null verschiedener Startparameter $k_o$ für das für eine bestimmte Bremsverzögerung pro Einheitpedalauslenkung benötigte Druckniveau P (damit die Stufbarkeit bzw. Pedalauflösung beeinflussend), und in Registerzelle 28 ein von Null verschiedener Startparameter $\phi o$ für die zwischenachsige Bremsdruckverteilung $\phi$ - (damit die Adhäsion beeinflussend) abgelegt. Beginnend mit einem Initialisierungsschritt 29 wird bei Fahrtbeginn folgender Zyklus aktiviert und dann alle 10 bis 50 ms durchlaufen:

In einem Schritt 30 werden zunächst vordere und hintere Einzelraddrehzahlen $N_{VR}$, $N_{VL}$, $N_{HR}$, $N_{HL}$ fortlaufend gemessen und daraus achsweise Mittelwerte $N_v$, $N_h$, ein absoluter Über-alles-Drehzahlmittelwert $N_m$ sowie die Differenz Delta $N = N_v - N_n$ der achsweise gemittelten Raddrehzahlen berechnet.

Im darauffolgenden Schritt 31 geschieht eine Abfrage, ob die Abbremsanforderung (Sollwertvorgabe entsprechend dem Fahrerwunsch) $Z_s$ gleich Null ist. Ist dies der Fall (J), liegt keine Bremsanforderung vor, und die aktuellen Raddrehzahlen können als im wesentlichen nicht schlupfbehaftet bewertet werden. Im somit ungebremsten Zustand wird dann nach statistischer Glättung bzw. Tiefpaßfilterung die aktuelle Differenz $(N_v - N_h)$ der achsgemittelten Raddrehzahlen als Delta $N_u$ in Registerzelle 26 des Bremsrechnerspeichers 25 abgelegt und der Ausgangswert Null bzw. der jeweils darin gespeicherte Wert damit überschrieben; dieser Speicherwert repräsentiert somit den ungebremsten Drehzahloffset aufgrund abweichender Reifengrößen bzw. Abrollumfänge, abweichender Reifendrücke und somit auch differierender Abrollradien. Die erwähnte Glättung bzw. Filterung beseitigt Schwankungen ("Schlagen") des Wertes Delta $N_u$ aufgrund unrunder Reifen etc., Kurvenfahrt und Antriebsschlupf.

Ergibt sich aus Schritt 31 eine von Null abweichende Bremsanforderung (Sollwertvorgabe durch den Fahrer), wird im Schritt 32 ein Sollbremsdruckniveau P aufgebaut, das dem Produkt aus Sollverzögerung $Z_s$ und einem das Bremsdruckniveau P bestimmenden Faktor k entspricht. Aus diesem Sollbremsdruckniveau P wird durch entsprechend achsweise Ansteuerung der Radbremsventile nach Maßgabe des Druckverteilungsparameters $\phi$ ein Vorderachsbremsdruck $P_v$ und ein Hinterachsbremsdruck $P_h$ aufgebaut.

Analog zum vorherigen Schritt 31 im ungebremsten Zustand wird nun in Schritt 33 im gebremsten Zustand die zwischenachsige Drehzahldifferenz Delta N ermittelt. Von ihr wird der aktuell abgespeicherte Wert Delta $N_u$ im davor gebrem-

sten Zustand abgezogen, woraus eine normalisierte, von Radeinflüssen entstörte Drehzahldifferenz Delta $N_b$ folgt. Außerdem wird im nach folgenden Schritt 34 der Mittelwert der Raddrehzahlen $N_m$ differenziert; als Differentiationsergebnis wird die Abbremsung Z erhalten. Im folgenden sind nun Grenzwertprüfungen 37 und 35 bezüglich Delta $N_b$ und Z zur adaptiven Korrektur der r Bremsdruckverteilung $\phi$ und des Bremsdruckniveaus P vorgesehen.

Der Schritt 35 dient der Adaption der Stufbarkeit der Bremsverzögerung am Pedal.

In diesem Schritt wird abgefragt, ob die Betragsabweichung von 1 der auf die aktuelle Sollverzögerung $Z_s$ normierten Ist-Verzögerung Z größer als ein vorgegebener erster Grenzwert von z.B. 0,1 ist. Ist dies nicht der Fall, bleibt das (bei Fahrtbeginn bzw. Initialisierung durch den Startparameter $k_o$) vorgegebene spezifische Bremsdruckniveau P erhalten, und der aktuelle Parameter k bleibt somit in Speicherzelle 27 gespeichert. Ist dies der Fall (J), erfolgt in Schritt 36 eine Erhöhung oder Erniedrigung von k um ein festes In-/Dekrement von z.B. 10 %. Zur Optimierung der Adaptionsschnelle sieht das Verfahren alternativ vor, die Größe dieser schrittweisen Änderung adaptiv zu wählen nach Maßgabe der Größe der die 0,1-Grenze übersteigende Differenz. Der so modifizierte Parameter k wird dann (ggfs. nach statistischer Glättung bzw. Tiefpaßfilterung) dem vorherigen in Registerzelle 27 überschrieben und als aktualisierter Wert über einen symbolisch angedeuteten Pfad 43 als Vorsteuergröße dem ALB-Bremsregelkries zugeführt.

Der Schritt 37 dient der Adaption der Adhäsion. In diesem Schritt wird abgefragt, ob die im Schritt 33 berechnete Abweichung der zwischenachsigen Drehzahldifferenz bei Bremsung $N_b$ betragsmäßig größer als ein vorgegebener zweiter Grenzwert von z.B. 1,5 % ist. Ist dies nicht der Fall, bleibt die (bei Fahrtbeginn bzw. Initialisierung durch den Startparameter $\phi_o$) vorgegebene spezifische Bremsdruckverteilung erhalten, und der aktuelle Parameter $\phi$ bleibt somit in Speicherzelle 28 gespeichert. Ist dies der Fall (J), erfolgt in Schritt 38 eine Erhöhung oder Erniedrigung von $\phi$ um z.B. einfestes In-/Dekrement von 5 %. Zur Optimierung der Adaptionsschnelle sieht das Verfahren alternativ vor, die Größe dieser schrittweisen Änderung adaptiv zu wählen nach Maßgabe der Größe der 5%-Grenze übersteigenden Differenz. Der so modifizierte Parameter $\phi$ wird dann (ggfs. nach statistischer Glättung bzw. Tiefpaßfilterung) dem vorherigen in Registerzelle 28 überschrieben und als aktualisierter Wert über einen symbolisch angedeuteten Pfad 44 als Vorsteuergröße dem ALB-Bremsregelkries zugeführt.

Die Reihenfolge der Abfragen 35 und 37 kann auch vertauscht werden. Nach Durchlaufen dieser Abfragen ist das Taktende 39 erreicht. Von ihm aus wird auf Anforderung des ALB-Bremsprogrammes, der Taktbeginn 29 aufgerufen. Zwischen Taktende 39 und Taktbeginn 29 kann das Betriebsprogramm des elektronischen Zentralsteuergerätes eine feste (z.B. 20 bis 100 ms) oder aber in Abhängigkeit von der Bremshäufigkeit oder von der Häufigkeit von Grenzwertüberschreitungen variabel steuerbare Verzögerungszeit vorsehen, die jedenfalls größer als die Abarbeitungszeit des flußdiagrammgemäßen ALB-Programmes ist. Auf diese Weise kann das ALB-Programm einem ABS-Programm als Latent Task unterschoben werden, mit der Wirkung, daß in einer Gefahrensituation, die sofortige Ausnutzung des Grenzkraftschlusses an der Blockiergrenze und damit die ABS-Funktion sofort verlangt, nur mit geringer Wahrscheinlichkeit eine gerade laufende ALB-Routine abgebrochen werden muß. Auf diese Weise wird die Ansprechzeit der ABS-Funktion statistisch nur sehr gering und praktisch jedenfalls vernachlässigbar verlängert. Zudem wird durch die - die aktuellen Reibungsverhältnisse Reifen/Fahrbahn mit berücksichtigende - adhäsionsgerechte Bremskraftverteilung ein frühes Ansprechen der ABS-Funktion in wünschenswerter Weise verhindert. Auch diese Gesichtspunkte lassen den hohen Zugewinn an Funktionalität herkömmlicher ABS-Regelverfahren und -vorrichtungen erkennen, welche durch das erfindungsgemäße Verfahren der Verwirklichung einer ALB-Funktion im wesentlichen nur softwaremäßig, und gemäß Aufgabe der Erfindung - somit äußerst kostengünstig zu erweitern sind, weil die für die ABS-Funktion ohnehin erforderlichen Raddrehzahlgeber ausreichen, d.h. weitere Geber somit überflüssig sind.

Es sind noch Ladepfade 40, 41 und 42 vorgesehen, durch die das übergeordnete Betriebsprogramm des elektronischen Zentralsteuergerätes 15 wenigstens einen der Inhalte der Speicherzellen 27, 28 und 26, d.h. den Parameter k oder $\phi$ oder den Echtzeitwert Delta $N_u$, bedingt ändern kann.

Beispielsweise kann ein bestimmter Anhängertyp oder Sattelauflieger kodiert sein, und bei Ankoppeln des Anhängers bzw. bei Auflegen des Sattelaufliegers an/auf das noch stehende Zugfahrzeug nach Maßgabe eines modifizierten Startparameters $k_o$ oder/und $\phi_o$ erfolgen, welcher als Ausgangswert einer getrenntfahrgestelligen Situation besser gerecht wird und damit zu einer maximalen Schnelle der ALB-Anfangsadaption (Startup Learning) ohne initiale Beeinträchtigung der Ansprechverzögerung der ABS-Funktion führt.

Da das erfindungsgemäße Verfahren als Eingangsgrößen nur die Drehzahlsignale der ABS-Radsensoren benötigt, kann es auch in unterschiedlichsten elektronischen ABS-Steuergeräten leicht implementiert werden, wobei in jedem Falle die erfindungsgemäße Vorrichtung erhalten wird. Der Rahmen der Erfindung wird also keineswegs verlassen, wenn anstelle eines ausführungs- oder herstellerspezifischen elektronischen ABS-Zentralsteuergerätes ein beliebiges als Bestandteil der erfindungsgemäßen Vorrichtung dient, sofern es nur außer Raddrehzahlgebern keine weiteren Geber für seinen Betreib benötigt.

**Patentansprüche**

1. Verfahren zur Durchführung einer lastabhängigen Regelung des Bremsdruckes an einem Nutzfahrzeug, wobei dieses mit einem an sich bekannten, elektrisch wirkenden Anti-Blockier-System (ABS) mit elektronischer Zentralsteuerung und achsnahen ABS-Bremsventilen ausgerüstet ist und bremsbaren Rädern zugeordnete Drehzahlgeber umfaßt, welche als Istwert-Geber (momentane Raddrehzahl) für eine ABS-Regelung dienen, welche bei einem Radbremsdruck nahe der Blockiergrenze wirksam ist,
**dadurch gekennzeichnet,**
   - daß die zwischenachsige Bremsdruckverteilung ($\phi = P_{v(vorn)}/P_{h(hinten)}$) allein nach Maßgabe einer Auswertung der von den Raddrehzahlgebern gelieferten Raddrehzahlsignale in einem Schlupfbereich unterhalb des Bereiches, in dem die ABS-Funktion wirksam wird, automatisch geregelt wird, und
   - daß als Maßgabe für die automatische Regelung besagter Bremsdruckverteilung ($\phi$) allein die Überschreitung eines ersten vorgebbaren Bremswertes durch eine korrigierbare Differenz zwischenachsiger Raddrehzahlen bei Bremsung dient.

2. Verfahren nach Anspruch 1,
**dadurch gekennzeichnet,**
   - daß die Korrektur der Differenz zwischenachsiger Raddrehzahlen bei Bremsung dadurch erfolgt, daß die vor dem Bremsvorgang ungebremst erfaßte zwischenachsige Raddrehzahldifferenz (Delta $N_u$) als gespeicherter Wert von der bei Bremsung aktuell erfaßten zwischenachsigen Raddrehzahldifferenz (Delta N) abgezogen wird.

3. Verfahren nach Anspruch 1,
**dadurch gekennzeichnet,**
   - daß die zwischenachsige Bremsdruckverteilung ($\phi$) von einem fahrzeugspezifisch und/oder ladungsspezifisch abgespeicherten Referenz- oder Startwert ($\phi_o$) ausgehend selbstlernend, d.h. adaptiv nachgeführt wird.

4. Verfahren nach Anspruch 3,
**dadurch gekennzeichnet,**
   - daß die Nachführung der zwischenachsigen Bremsdruckverteilung ($\phi$) stufenweise um ein festliegendes In- bzw. Dekrement erfolgt.

5. Verfahren nach Anspruch 4,
**dadurch gekennzeichnet,**
   - daß besagtes In- bzw. Dekrement 2 bis 10 % des des zuletzt erreichten Wertes für die Zwischenachsige Bremsdruckverteilung ($\phi$) beträgt.

6. Verfahren nach Anspruch 3,
**dadurch gekennzeichnet,**
   - daß die Nachführung der zwischenachsigen Bremsdruckverteilung ($\phi$) in Stufen erfolgt, deren Weite ausgehend von einem Minimalwert in Abhängigkeit von der Größe der Überschreitung des vorgebbar festgelegten ersten Grenzwertes durch die korrigierbare Differenz zwischenachsiger Raddrehzahlen bei Bremsung gesteuert wird.

7. Verfahren nach Anspruch 1,
**dadurch gekennzeichnet,**
   - daß besagter erster Grenzwert zwischen 1 und 7 % der achsgemittelten Raddrehzahl bei Bremsung liegt.

8. Verfahren nach Anspruch 3,
**dadurch gekennzeichnet,**
   - daß ein gespeicherter Wert für die zwischenachsige Bremsdruckverteilung ($\phi$) wenigstens vorübergehend und wenigstens zur Anpassung an eine von einer Bezugslast sich charakteristisch unterscheidenden Last durch einen entsprechend anderen, zunächst nicht adaptierten Wert überschrieben bzw. ersetzt wird.

9. Verfahren nach Anspruch 1,
**dadurch gekennzeichnet,**
   - daß das Gesamtbremsdruckniveau (P) über einen Bezugsfaktor (k = P/Z) durch Auswertung der von den Raddrehzahlgebern gelieferten Raddrehzahlsignale in einem Schlupfbereich unterhalb des Bereiches, in dem die ABS-Funktion wirksam wird, automatisch geregelt wird, und
   - daß als Maßgabe für die automatische Regelung besagten Gesamtbremsdruckniveaus (P) die Überschreitung eines zweiten vorgebbaren Grenzwertes durch den Betrag des um eins verminderten Quotienten aus Ist-Abbremsung (Z) und Soll-Abbremsung (Z$_s$) dient.

10. Verfahren nach Anspruch 9,
    **dadurch gekennzeichnet,**
    daß als Referenzgröße für die automatische Regelung des Gesamtdruckniveaus (P) eine vom Bremspedal (11) bzw. Betriebsbremsventil (10) bezogene, den Solldruck gemäß Fahrerwunsch charakterisierende Größe (Z$_s$) verarbeitet wird.

11. Verfahren nach Anspruch 10,
    **dadurch gekennzeichnet,**
    - daß ein Wert für die Soll-Abbremsung (Z$_s$) in Abhängigkeit von der Stellung des Bremspedals vorgebbar ist,
    - daß ein Wert für die Ist-Abbremsung (Z) durch Differentiation der gemittelten Raddrehzahl bei Bremsung gewonnen wird,
    - daß eine Korrektur des Gesamtbremsdruckniveaus (P) derart erfolgt, daß eine Änderung eines Faktors (k$_o$) als Startwert für den Bezugsfaktor (k) dann erfolgt, wenn die differenz des Quotienten Z/Z$_s$ vom Wert 1 einen Grenzwert überschreitet.

12. Verfahren nach Anspruch 10,
    **dadurch gekennzeichnet,**
    - daß der das Gesamtbremsdruckniveau (P) bestimmende Faktor (k) von einem fahrzeugspezifisch und/oder lastspezifisch abgespeicherten Referenz- oder Startwert (ko) ausgehend selbstlernend, d.h. adaptiv nachgeführt wird.

13. Verfahren nach Anspruch 12,
    **dadurch gekennzeichnet,**
    - daß die Nachführung des das Gesamtbremsdruckniveau (P) bestimmenden Faktors (k) stufenweise um ein festliegendes In- bzw. Dekrement erfolgt.

14. Verfahren nach Anspruch 13,
    **dadurch gekennzeichnet,**
    - daß besagtes In- bzw. Dekrement 5 bis 15 % des zuletzt erreichten Wertes für (k) beträgt.

15. Verfahren nach Anspruch 12,
    **dadurch gekennzeichnet,**
    - daß die Nachführung des das Gesamtbremsdruckniveau (P) bestimmenden Faktors (k) in Stufen erfolgt, deren Größe von der Größe der Überschreitung des vorgebbar festgelegten zweiten Grenzwertes durch den Betrag des um eins verminderten Quotienten aus Ist-Abbremsung und Soll-Abbremsung abhängig ist.

16. Verfahren nach Anspruch 10,
    **dadurch gekennzeichnet,**
    - daß besagter zweiter Grenzwert zwischen 0,02 und 0,15 liegt.

17. Verfahren nach Anspruch 12,
    **dadurch gekennzeichnet,**
    - daß ein gespeicherter Wert (k) für das Gesamtbremsdruckniveau (P) wenigstens vorübergehend und wenigstens zu Anpassung an eine von einer Bezugslast sich charakteristisch unterscheidenden Last durch einen entsprechend anderen, zunächst nicht adaptierten Wert überschrieben bzw. ersetzt wird.

18. Verfahren nach Anspruch 1,
    **dadurch gekennzeichnet,**
    - daß die maßgebende Auswertung der Raddrehzahlen vor Differenzbildung eine achsweise Mittelung von Raddrehzahlen umfaßt.

19. Verfahren nach Anspruch 12,
    **dadurch gekennzeichnet,**
    daß der genannte Speicherwert (k$_o$) schon vor der ersten Bremsung aufgrund kodierter Informationen z.B. über mitgeführte Nutzlast oder Anhänger/Auflieger oder aufgrund weitere Auswertungen der Raddrehzahlen in ungebremsten Zustand korrigiert wird.

20. Verfahren nach Anspruch 19,
    **dadurch gekennzeichnet,**
    daß die Anfangswerte für $\phi$ oder k aufgrund gespeicherter Daten des Fahrzeuges oder aus früheren Fahrten berechnet werden.

21. Vorrichtung zur Durchführung des Verfahrens nach wenigstens einem der vorhergehenden Ansprüche,
    **dadurch gekennzeichnet,**
    - daß sie folgende Mittel umfaßt:
      - eine Druckmittelversorgungseinrichtung (1,2,3,4,5,7,8,13,14) zur achsweisen Bereitstellung von Druckmittel mit einem pedalbetätigbaren (11) Betriebsbremsventil (10), über welches der Betriebsbremsdruck in wenigstens zwei Druckmittelkreisen mit radnahen Bremsmitteln vom Fahrer vorgebbar ist, und welches ferner einen das vom Pedal vorgebbare Druckniveau charakterisierenden elektrischen Sensor (12) aufweist;

- einzelnen Fahrzeugrädern zugeordnete Raddrehzahlgeber (21/1 bis 21/4), die mit dem Zentralsteuergerät über Leitungen (22/1 bis 22/4) verbunden sind;
- ein elektronisches Zentralsteuergerät (15) mit ABS-Funktion und individuellen Empfangseingängen für Raddrehzahlsignale und ein das vom Betriebsbremsventil (10) einstellbare Bremsdruckniveau charakterisierendes Signal und mit Ausgängen zur Ansteuerung von einzelnen Fahrzeugrädern zugeordneten elektrischen ABS-Bremsventilen;
- elektrisch ansteuerbare ABS-Ventile (18/1 bis 18/4), die mit dem Zentralsteuergerät (15) über Leitungen (19/1 bis 19/4) verbunden und auch außerhalb des Radschlupfbereichs an der Blockiergrenze ansteuerbar sind, und
- daß das elektronische Zentralsteuergerät einen Rechner mit Wertespeicher enthält, wobei in diesem Rechner Raddrehzahldifferenzen und zeitliche Differentiale der Raddrehzahlen bildbar sind, die sowohl der ABS-Regelfunktion als auch der ALB-Regelfunktion als Eingangsgrößen dienen.

22. Vorrichtung nach Anspruch 21,
**dadurch gekennzeichnet,**
- daß im Zentralsteuergerät (15) Raddrehzahldifferenzen für die ABS-Funktion und für die ALB-Funktion unterschiedlich filterbar bzw. mittelbar sind, und
- daß für die ALB-Funktion sowohl achsweise Mittelwerte als auch ein Gesamtmittelwert der Raddrehzahl und dessen zeitliche Ableitung bildbar sind.

**Claims**

1. Process for carrying out a load-dependent regulation of the brake pressure on a commercial vehicle, the latter being equipped with an electrically acting anti-lock system (ABS) known per se, with an electronic central control and ABS brake valves near the axles, and possessing rotational-speed transmitters assigned to brakeable wheels and serving as actual value transmitters (instantaneous wheel speed) for an ABS control which takes effect at a wheel brake pressure near the locking limit, characterized in that the mid-axle brake-pressure distribution ($\phi = P_{v \text{ (front)}} / P_{h \text{ (rear)}}$) is regulated automatically solely according to an evaluation of the wheel-speed signals supplied by the wheel-speed transmitters, in a slip range below the range in which the ABS function takes effect, and in that only the exceeding of a first predeterminable brake value by a correctable difference between mid-axle wheel speeds during braking serves as the criterion for the automatic regulation of the said brake-pressure distribution ($\phi$).

2. Process according to Claim 1, characterized in that the correction of the difference between mid-axle wheel speeds during braking is made by subtracting the mid-axle wheel-speed difference (delta $N_u$) detected in the non-braked state before the braking operation, as a stored value, from the mid-axle wheel-speed difference (delta N) currently detected during braking.

3. Process according to Claim 1, characterized in that the mid-axle brake-pressure distribution ($\phi$) is corrected in a self-learning manner, that is to say adaptively, starting from a reference or starting value ($\phi_o$) stored in a vehicle-specific and or load-specific manner.

4. Process according to Claim 3, characterized in that the correction of the mid-axle brake-pressure distribution ($\phi$) takes place in steps of a fixed increment or decrement.

5. Process according to Claim 4, characterized in that the said increment or decrement is 2 to 10% of the value last obtained for the mid-axle brake-pressure distribution ($\phi$).

6. Process according to Claim 3, characterized in that the correction of the mid-axle brake-pressure distribution ($\phi$) takes place in steps, the width of which is controlled, starting from a minimum value, as a function of the amount by which the predeterminably fixed first limiting value is exceeded by the correctable difference between mid-axle wheel speeds during braking.

7. Process according to Claim 1, characterized in that the said first limiting value is between 1 and 7% of the wheel speed during braking, averaged in axle terms.

8. Process according to Claim 3, characterized in that a stored value for the mid-axle brake-pressure distribution ($\phi$) is overwritten or replaced, at least temporarily and at least for adaptation to a load differing characteristically from a reference load, by a correspondingly different and initially non-adapted value.

9. Process according to Claim 1, characterized in that the total brake-pressure level (P) is regulated automatically via a reference factor (k = P/Z) by evaluating the wheel-speed signals supplied by the wheel-speed transmitters, in a slip range below the range in which the ABS function takes effect, and in that the exceeding of a second predeterminable limiting value by the amount of the quotient of the actual braking (Z) and desired braking $(Z_s)$, less one, serves as a criterion for the automatic regulation of the said total brake-pressure level (P).

10. Process according to Claim 9, characterized in that a quantity $(Z_s)$ obtained from the brake pedal (11) or operating brake valve (10) and characterizing the desired pressure according to the driver's requirements is processed as a reference quantity for the automatic regulation of the total pressure level (P).

11. Process according to Claim 10, characterized in that a value for the desired braking $(Z_s)$ is predeterminable as a function of the position of the brake pedal, in that a value for the actual braking (Z) is obtained by differentiation of the averaged wheel speed during braking, and in that a correction of the total brake-pressure level (P) is made in such a way that a change of a factor $(k_o)$ as a starting value for the reference factor (k) takes place when the difference between the quotient $Z/Z_s$ and the value 1 exceeds a limiting value.

12. Process according to Claim 10, characterized in that the factor (k) determining the total brake-pressure level (P) is corrected in a self-learning manner, that is to say adaptively, starting from a reference or starting value (ko) stored in a vehicle-specific and/or load-specific manner.

13. Process according to Claim 12, characterized in that the correction of the factor (k) determining the total brake-pressure level (P) takes place in steps of a fixed increment or decrement.

14. Process according to Claim 13, characterized in that the said increment or decrement is 5 to 15% of the value last obtained for (k).

15. Process according to Claim 12, characterized in that the correction of the factor (k) determining the total brake-pressure level (P) takes place in steps, the amount of which is dependent on the amount by which the predeterminably fixed second limiting value is exceeded by the amount of the quotient of the actual braking and desired braking, less one.

16. Process according to Claim 10, characterized in that the said second limiting value is between 0.02 and 0.15.

17. Process according to Claim 12, characterized in that a stored value (k) for the total brake-pressure level (P) is overwritten or replaced, at least temporarily, and at least for adaptation to a load differing characteristically from a reference load, by a correspondingly different and initially non-adapted value.

18. Process according to Claim 1, characterized in that the critical evaluation of the wheel speeds before the difference formation involves an averaging of wheel speeds in axle terms.

19. Process according to Claim 12, characterized in that the said stored value $(k_o)$ is corrected, even before the first braking, on the basis of coded information, for example relating to a carried commercial load or trailer/semi-trailer, or on the basis of further evaluations of the wheel speeds in the non-braked state.

20. Process according to Claim 19, characterized in that the initial values for $\phi$ or k are calculated on the basis of stored data of the vehicle or from previous journeys.

21. Device for carrying out the process according to at least one of the preceding claims, characterized in that it comprises the following means:
    - a pressure-medium supply arrangement (1,2,3,4,5,7,8, 13,14) for the provision of pressure medium in terms of axles, with a pedal-actuable (11) operating brake valve (10), via which the operating brake pressure in at least two pressure-medium circuits with braking means located near the wheels is predeterminable by the driver, and furthermore which has an electrical sensor (12) characterizing the pressure level predeterminable by the pedal;
    - wheel-speed transmitters (21/1 to 21/4) which are assigned to individual vehicle wheels and which are connected to the central control unit via lines (22/1 to 22/4);

- an electronic central control unit (15) with an ABS function and with individual receiving inputs for wheel-speed signals and for a signal characterizing the brake-pressure level adjustable by the operating brake valve (10), and with outputs for controlling electrical ABS brake valves assigned to individual vehicle wheels;
- electrically controllable ABS valves (18/1 to 18/4) which are connected to the central control unit (15) via lines (19/1 to 19/4) and which are also controllable outside the wheel-slip range at the locking limit, and
- in that the electronic central control unit contains a computer with a value store, and in this computer it is possible to form wheel-speed differences and time differentials of the wheel speeds which serve as input quantities both for the ABS control function and for the ALB control function.

22. Device according to Claim 21, characterized in that wheel-speed differences for the ABS function and for the ALB function can be filtered or averaged differently in the central control unit (15), and in that both average values in axle terms and a total average value of the wheel speed and its time derivation can be formed for the ALB function.

**Revendications**

1. Procédé pour exécuter une régulation, en fonction de la charge, de la pression de freinage dans un véhicule utilitaire, ce dernier étant équipé d'un système d'antiblocage (ABS) connu en soi, qui agit électriquement et comporte une unité électronique de commande centrale et des vannes de commande de freinage ABS, proches des essieux, et comprend des transmetteurs de la vitesse de rotation, qui sont associés aux roues pouvant être freinées et qui sont utilisés en tant que transmetteurs de valeurs réelles (vitesse de rotation instantanée de roue) pour une régulation ABS, qui est active pour une pression de freinage de la roue proche de la limite de blocage, caractérisé en ce
    - que la répartition de la pression de freinage ($\phi = P_{v(avant)}/P_{h(arrière)}$ entre essieux est réglée automatiquement uniquement en fonction d'une évaluation des signaux des vitesses de rotation des roues, délivrés par les transmetteurs des vitesses de rotation des roues, dans une gamme de glissement au-dessous de la gamme, dans laquelle la fonction ABS devient active, et
    - que seul le dépassement d'une première valeur de freinage pouvant être prédéterminée, par une différence, qui peut être corrigée, entre les vitesses de rotation entre essieux lors du freinage est utilisé en tant que paramètre pour la régulation automatique de ladite répartition ($\phi_v$) de la pression de freinage.

2. Procédé selon la revendication 1, caractérisé en ce
    - que la correction de la différence entre les vitesses de rotation des roues entre essieux lors du freinage est obtenue grâce au fait que la différence entre les vitesses de rotation des roues entre essieux (delta $N_u$), détectée à l'état non freiné et avant l'opération de freinage, est déduite, en tant que valeur mémorisée, de la différence entre les vitesses de rotation des roues entre essieux (delta N), détectée effectivement lors du freinage.

3. Procédé selon la revendication 1, caractérisé en ce
    - que la répartition de la pression de freinage ($\phi$) entre essieux est asservie avec auto-apprentissage, c'est-à-dire de façon adaptative, à partir d'une valeur de référence ou de départ ($\phi_o$) mémorisée d'une manière spécifique au véhicule et/ou d'une manière spécifique à la charge.

4. Procédé selon la revendication 3, caractérisé en ce
    - que l'asservissement de la répartition de la pression de freinage ($\phi$) entre essieux s'effectue par échelons conformément à un incrément ou à un décrément fixe.

5. Procédé selon la revendication 4, caractérisé en ce
    - que ledit incrément ou décrément est compris entre 2 et 10 % de la valeur, atteinte en dernier lieu, pour la répartition de la pression de freinage ($\phi$) entre essieux.

6. Procédé selon la revendication 3, caractérisé en ce
    - que l'asservissement de la répartition de la pression de freinage ($\phi$) entre essieux s'effectue par échelons, dont l'étendue est commandée à partir d'une valeur minimale en fonction de l'amplitude de la première valeur limite fixée d'une manière pouvant être prédéterminée, par la différence, qui peut être corrigée, des vitesses de rotation des roues entre essieux lors du freinage.

7. Procédé selon la revendication 1, caractérisé en ce
   - que ladite première valeur limite est comprise entre 1 et 7 % de la vitesse de rotation de roue, en tant que valeur moyenne pour les essieux, lors du freinage.

8. Procédé selon la revendication 3, caractérisé en ce
   - qu'une valeur mémorisée pour la répartition de la pression de freinage ($\phi$) entre essieux est dépassée ou remplacée au moins de façon transitoire et au moins pour réaliser une adaptation à la charge qui diffère de façon caractéristique d'une charge de référence, par une autre valeur correspondante, tout d'abord non adaptée.

9. Procédé selon la revendication 1, caractérisé en ce
   - que le niveau (P) de la pression de freinage totale est réglé automatiquement par l'interméidaire d'un facteur de référence (k = P/Z) par évaluation des signaux des vitesses de rotation des roues, délivrés par les transmetteurs des vitesses de rotation des roues, dans une gamme de glissement située au-dessous de la gamme, dans laquelle la fonction ABS devient active, et
   - que le dépassement d'une seconde valeur limite pouvant être prédéterminée, par la valeur du quotient du freinage réel (Z) par le freinage de consigne ($Z_s$), diminué de un, est utilisé en tant que paramètre pour la régulation automatique dudit niveau total (P) de la pression de freinage.

10. Procédé selon la revendication 9, caractérisé en ce qu'on utilise, comme grandeur de référence pour la régulation automatique du niveau total (P) de pression, une grandeur ($Z_s$), qui est rapportée à la pédale de frein (11) ou à la valve (10) du frein de service et caractérise la pression de consigne conformément au désir du conducteur.

11. Procédé selon la revendication 10, caractérisé en ce
    - qu'une valeur pour le freinage de consigne ($Z_s$) peut être prédéterminée en fonction de la position de la pédale de frein, et
    - qu'une valeur pour le freinage réel (Z) est obtenue par différentiation de la moyenne de la vitesse de rotation de roue lors du freinage,
    - qu'une correction du niveau total (P) de la pression de freinage est exécutée par le fait qu'une modification d'un facteur ($k_o$) en tant que valeur de départ pour le facteur de référence (k) est réalisée lorsque la différence entre le quotient $Z/Z_s$ et la valeur 1 dépasse une valeur limite.

12. Procédé selon la revendication 10, caractérisé en ce
    - que le facteur (k), qui détermine le niveau de la pression totale de freinage (P), est asservi avec auto-apprentissage, c'est-à-dire de façon adaptative, sur la base d'une valeur de référence ou de départ (ko) mémorisée de façon spécifique au véhicule et/ou de façon spécifique à la charge.

13. Procédé selon la revendication 12, caractérisé en ce
    - que l'asservissement du facteur (k), qui détermine le niveau de la pression totale de freinage (P), s'effectue par échelons selon un incrément ou un décrément fixe.

14. Procédé selon la revendication 13, caractérisé en ce
    - que ledit incrément ou décrément est compris entre 5 et 15 % de la valeur atteinte en dernier lieu pour (k).

15. Procédé selon la revendication 12, caractérisé en ce
    - que l'asservissement du facteur (k), qui détermine le niveau de la pression totale de freinage (P), s'effectue par échelons, dont l'amplitude dépend de l'amplitude du dépassement de la seconde valeur limite fixée de façon pouvant être prédéterminée, par la valeur du quotient du freinage réel par le freinage de consigne, réduit de un.

16. Procédé selon la revendication 10, caractérisé en ce

- que ladite seconde valeur limite est comprise entre 0,02 et 0,15.

17. Procédé selon la revendication 12, caractérisé en ce
  - qu'une valeur mémorisée (k) pour le niveau de la pression totale de freinage (P) est dépassée ou remplacée au moins pour réaliser l'adaptation à une charge différente de façon caractéristique d'une charge de référence, par une autre valeur correspondante, tout d'abord non adaptée.

18. Procédé selon la revendication 1, caractérisé en ce
  - que l'évaluation déterminante des vitesses de rotation des roues avant la formation de la différence comprend une formation de la moyenne, rapportée aux essieux, de vitesses de rotation des roues.

19. Procédé selon la revendication 12, caractérisé en ce que ladite valeur mémorisée ($k_o$) est corrigée déjà avant le premier freinage sur la base d'informations codées possédant par exemple une charge utile ou une remorque/une semi-remorque tractée, ou sur la base d'autres évaluations des vitesses de rotation des roues à l'état non freiné.

20. Procédé selon la revendication 19, caractérisé en ce que les valeurs initiales pour $\phi$ ou k sont calculées sur la base de données mémorisées du véhicule ou à partir de déplacements antérieurs.

21. Dispositif pour la mise en oeuvre du procédé selon au moins l'une des revendications précédentes, caractérisé en ce
  - qu'il comprend les moyens suivants :
    - un dispositif (1,2,3,4,5,7,8,13,14) d'alimentation d'un fluide sous pression pour délivrer, au niveau des essieux, le fluide sous pression et comportant une valve de freinage de service (10), pouvant être actionnée (11) par une pédale et au moyen de laquelle la pression de freinage de service peut être prédéterminée par le conducteur dans au moins deux circuits du fluide de freinage comportant des moyens de freinage situés à proximité des roues, et qui en outre comporte un capteur électrique (12) qui caractérise le niveau de pression pouvant être prédéterminé par la pédale;
    - des transmetteurs (21/1 à 21/4) des vitesses de rotation des roues, qui sont associés à des roues individuelles du véhicule et sont raccordés à l'unité de commande centrale par l'intermédiaire de lignes (22/1 à 22/4);
    - une unité de commande centrale électronique (15) comportant une fonction ABS et des entrées de réception individuelles pour des signaux des vitesses de rotation des roues et un signal qui caractérise le niveau de la pression de freinage réglable par la valve de freinage de service (10), et comportant des sorties pour la commande de valves électriques de freinage ABS associées à différentes roues du véhicule;
    - des valves ABS commandables électriquement (18/1 à 18/4), qui sont raccordées à l'unité de commande centrale (15) par l'intermédiaire de lignes (19/1 à 19/4) et peuvent être commandées également à l'extérieur de la gamme du glissement des roues, au voisinage de la limite de blocage, et
  - que l'unité de commande centrale électronique contient un calculateur comportant des mémoires de valeurs, calculateur dans lequel peuvent être formées des différences entre les vitesses de rotation des roues et des différentielles dans le temps des vitesses de rotation des roues, qui sont utilisées en tant que grandeurs d'entrée aussi bien pour la fonction de régulation ABS que pour la fonction de régulation ALB.

22. Dispositif selon la revendication 21, caractérisé en ce
  - que dans l'unité de commande centrale (15), des différences entre les vitesses de rotation des roues peuvent être filtrées différemment pour la fonction ABS et pour la fonction ALB ou que leur moyenne peut être formée différemment pour ces fonctions et
  - que pour la fonction ALB, on peut former aussi bien des valeurs moyennes, rapportées aux essieux, qu'une valeur moyenne globale de la vitesse de rotation des roues et de la dérivée dans le temps de cette valeur.

## Fig.1

Taktbeginn — 29

EP 0 357 983 B1

Fig. 2

Fig. 2